# FASCICULE DE BREVET EUROPEEN

(11) **EP 2 973 603 B1**
(45) Date de publication et mention de la délivrance du brevet: **25.01.2017**
(21) Numéro de dépôt: 14709647.3
(22) Date de dépôt: 12.03.2014
(51) Int. Cl.: G21F 5/005, G21F 5/008

(54) **SYSTEME INTEGRE DE CONSTITUTION ET DE TRANSPORT D'ENSEMBLES D'EMBALLAGE ET LEURS STATIONS D'ASSEMBLAGE, DE REMPLISSAGE ET DE DÉSASSEMBLAGE**
INTEGRIERTES SYSTEM ZUM FORMEN UND FÖRDERN VON VERPACKUNGSANORDNUNGEN SOWIE ANORDNUNG, FÜLL- UND DEMONTAGESTATIONEN DAFÜR
INTEGRATED SYSTEM FOR FORMING AND TRANSPORTING PACKAGING ASSEMBLIES, AND THE ASSEMBLY, FILLING AND DISASSEMBLY STATIONS THEREOF

(30) Priorité: 13.03.2013 BE 201300160
(43) Date de publication de la demande: 20.01.2016
(73) Titulaire: Cockerill Maintenance & Ingénierie S.A., 4100 Seraing (BE)
(72) Inventeur: FONTAINE, Philippe, B-4122 Plainevaux (BE); GRESSANI, Aldo, B-4460 Grâce-Hollogne (BE)
(74) Mandataire: Pronovem
(86) Numéro de dépôt international: PCT/EP2014/054769
(87) Numéro de publication internationale: WO 2014/140064

(56) Documents cités:
- JP-A- 2001 141 882
- US-A- 4 652 422
- US-A1- 2005 117 687

## Description

### Objet de l'invention

La présente invention se rapporte au conditionnement, au stockage et au transport de déchets radioactifs dans des emballages répondant aux normes internationales de transport de matières radioactives (combustible, matières contaminées et radio-activées).

L'invention est destinée principalement au secteur des centrales nucléaires dans le domaine civil, de préférence de type à eau légère et de préférence encore de type à réacteur à eau sous pression REP (PWR en anglais), pour ce qui concerne notamment les activités de maintenance ou de démantèlement de tubes-guides de grappes réformés (TGdGR).

L'invention concerne plus particulièrement les activités de conditionnement, transport et entreposage des TGdGR.

### Arrière-plan technologique et état de la technique

Dans les centrales nucléaires à réacteur à eau pressurisée ou bouillante, on module la puissance du réacteur en déplaçant dans le coeur du réacteur des barres absorbant le flux de neutrons généré par la fission nucléaire. Ces barres sont assemblées en grappes de commande qui sont introduites au sein des assemblages combustibles. Ces derniers comportent des emplacements creux en nombre correspondant à celui du nombre de barres par grappe. Ces emplacements creux sont occupés par des tubes-guides des grappes de commande qui sont susceptibles de se dégrader au cours du temps (usure suite au frottement en usage, déformation par la haute température).

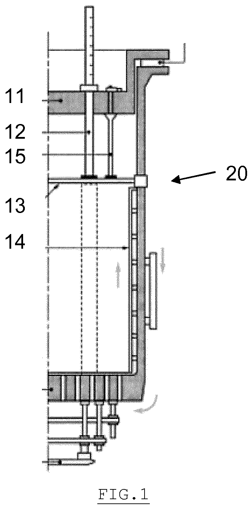

La figure 1 montre une vue schématique en coupe d'une cuve de réacteur REP de puissance minimale 900 MW. Les équipements internes de la cuve, hors combustible nucléaire, assurent notamment les fonctions de support et maintien latéral des assemblages combustibles et de guidage des grappes de commande et de l'instrumentation. Les tubes-guides 12 sont disposés au niveau des équipements internes supérieurs au travers d'une plaque-support ou un chapeau-support supérieur(e) 11 jusqu'à une plaque supérieure de coeur 13, les deux plaques 11, 13 étant séparées par des entretoises tubulaires 15.

Principalement suite à l'accident nucléaire de Fukushima en 2011, de nombreux pays ont revu leur politique de recours à l'énergie nucléaire et ont considérablement augmenté leurs exigences en matière de sécurité nucléaire. Actuellement, spécifiquement dans le domaine de la maintenance nucléaire, on constate, tant de par ces nouvelles législations que du fait du vieillissement des centrales existantes, un besoin accru de remplacement et donc pour un conditionnement et transport, rapide et fiable, d'un nombre important de tubes-guides de grappes réformés (TGdGR) provenant du réacteur, de la piscine ou d'emballages d'entreposage, etc. d'unités de centrales nucléaires.

Jusqu'à présent, on remplaçait les TGdGR endommagés de temps à autre, en même temps que le combustible nucléaire. Du fait qu'ils sont soumis à un flux intense de neutrons en utilisation, ces TGdGR retirés du coeur du réacteur présentent un taux de radioactivité pouvant être dangereux pour la santé des opérateurs (par exemple résultant de la présence de ⁶⁰Co qui émet des rayons gamma très énergétiques). Jusqu'à présent, plusieurs dizaines de tubes pouvaient ainsi être confinés dans le même type d'emballage, depuis le conditionnement en zone, jusqu'à l'endroit de stockage ou de traitement, mais toujours dans le périmètre de la centrale.

On souhaite aujourd'hui permettre le conditionnement de ces TGdGR dans le bâtiment de réacteur, au sein d'un espace limité et avec une capacité limitée de manutention, ainsi que leur transport, de manière agréée, sûre, fiable, économique et rapide.

Les emballages destinés au transport de matières radioactives doivent obéir à de normes fixées par le Règlement de l'Agence Internationale de l'Energie Atomique (AIEA). Ainsi l'emballage de Type A est un emballage certifié utilisé pour des quantités relativement limitées mais notables de produits radioactifs. Il est conçu pour résister à des accidents. Il est soumis à des tests simulant les conditions de transport. Sa conformité aux règles de l'AIEA est aussi démontrée par calcul. L'emballage de Type B est un emballage certifié utilisé pour le transport de quantités de matières très radioactives. Il est conçu pour résister à des conditions d'accidents définies et est ainsi soumis à des essais qui simulent non seulement les conditions courantes de manutention et de transport mais aussi les conditions d'accident (par ex. chute libre, immersion, écrasement, poinçonnement, résistance au feu).

Les enjeux à rencontrer sont les suivants :
- assurer l'évacuation hors centrale des TGdGR, de préférence avec des emballages de Type A. Ainsi, si on veut transporter plusieurs TGdGR dans un même emballage, celui-ci doit obligatoirement être un emballage de Type B. Pour concevoir et faire agréer un emballage de Type B, il faut plusieurs années compte tenu des impositions réglementaires complexes en vigueur pour ces emballages ;
- supprimer ou à tout le moins réduire le temps de stockage temporaire des TGdGR dans les piscines ;
- réduire, voire supprimer le temps d'entreposage des TGdGR en centrale ;
- diminuer le temps des opérations en zone ;
- augmenter la sécurité des opérations en et hors zone ;
- diminuer le coût des opérations et le temps d'indisponibilité de la centrale ;
- assurer la radioprotection des colis transportés ;
- évacuer des TGdGR hors centrale, soit directement après leur extraction du réacteur, soit éventuellement à partir de leur entreposage en piscine, ou dans des emballages d'entreposage, non prévus pour le transport, afin de leur faire subir un traitement adapté ou un stockage en ou hors centrale et selon la législation en vigueur.

Les besoins précités ne sont pas satisfaits actuellement. En effet, jusqu'à présent le besoin identifié ci-dessus n'était pas considérable, voire était pratiquement marginal.

La solution dans l'état de la technique est d'entreposer ces TGdGR en piscine ou de les placer en centrale dans des emballages d'entreposage, non prévus pour le transport. Ces emballages assurent la radioprotection pour autant qu'il n'y ait pas de présence humaine continue et proche.

On connaît d'autres solutions existantes, par exemple le développement en cours d'un emballage de Type B pouvant contenir plusieurs TGdGR, par exemple cinq TGdGR.

Une autre option pour conditionner du matériel radioactif provenant de la piscine est de plonger l'emballage dans la piscine ou de le poser à côté de la piscine, rempli d'eau, sachant qu'en fin d'opération, il faut le vider et le sécher. De plus, s'il a été plongé dans la piscine, il faut décontaminer cet emballage avant tout déplacement.

Les défauts des solutions existantes sont les suivants :
- capacités limitées : les types actuels d'emballages aptes et adaptés à transporter des déchets radioactifs, et leur quantité disponible, entraînent des problèmes d'agréation et des problèmes logistiques difficilement acceptables pour l'environnement (autorités, population, sécurité, etc.) ;
- en cas d'accident lors du transport, les risques sont accrus lorsqu'il y a concentration de déchets radioactifs dans un seul emballage ;
- la charge utile et les dimensions autorisées sur route limitent les quantités de matières transportées ;
- les opérations liées au remplissage des emballages de Type B nécessitent des précautions accrues par rapport au Type A ;
- l'emballage de Type B nécessite un transport exceptionnel ;
- les emballages d'entreposage actuels ne sont pas conçus pour le transport ;
- dans le cas d'entreposage de longue durée en centrale une tour de protection supplémentaire est nécessaire autour des emballages d'entreposage, s'il y a présence humaine proche.

Les limites de ces solutions sont souvent liées à leur poids et leur volume pour transport routier.

On connaît également des solutions existantes dans d'autres domaines pour des besoins similaires, comme par exemple l'assemblage de bouteilles (rack) pour le transport routier et le transport ferroviaire de produits gazeux et/ou dangereux. Si nécessaire, on utilise un transport exceptionnel (dimensions augmentées suivant la législation routière).

Actuellement, il n'existe pas de système qui permette à la fois le conditionnement, l'évacuation massive hors bâtiment de réacteur et le transport de TGdGR dans des conditions de sécurité, de durée et de coûts compatibles avec les exigences techniques, règlementaires et économiques du marché et acceptées par la Société, alors que ce besoin est apparu récemment car lié à l'extension de la durée de vie d'unités REP.

De manière générale, on connaît des conteneurs conçus pour le stockage, la manutention, voire le transport de matières dangereuses telles que les matières radioactives, en particulier le combustible usé ou les déchets radioactifs issus des centrales nucléaires. Ces conteneurs ont généralement la forme de bouteilles, bidons ou fûts avec un corps, un fond et un couvercle ou deux couvercles, dont la fermeture peut être sécurisée. Le conteneur peut être constitué d'une ou plusieurs enveloppes, par exemple une enveloppe externe et une enveloppe interne (voir par exemple EP 2 172944, WO 2009/81078, WO 2008/153478, EP 1 978 530, WO 2008/97381, EP 2 059 930, US 5,431,295, EP 186 487).

Dans certains cas, un dispositif de stockage a été prévu pour stocker une certaine quantité de fûts : une plaque inférieure et une plaque supérieure reliées par des tube de guidage, en acier, la partie supérieure étant connectée à un manchon de guidage, de manière à empiler et sécuriser des fûts les uns sur les autres (CN 201134275 U), un conteneur cylindrique en matériau bitumeux permettant d'empiler en son sein des fûts individuels, l'espace entre les fûts étant rempli de mousse de polyuréthane, en vue d'empêcher la pénétration de vapeur d'eau ainsi que les fuites et effets dommageables à l'environnement (US 3,935,467).

On connaît aussi des assemblages d'emballage, par exemple un conteneur maritime ou de type palette comprenant des structures de support et de partition interne pour le transport et le stockage de produits radioactifs (EP 2 201 577, KR 20050072025).

Dans LT 201000049, les conteneurs sont pourvus de parties protectrices et d'orifices et crochets pour permettre la manutention et le transport sur route, en position verticale.

Le document US 2005/0217687 divulgue un appareil et des méthodes de stockage ou de transport de combustible nucléaire usé. Dans un mode de réalisation, un conteneur pour le stockage du combustible nucléaire usé comprend une pluralité de tubes allongés qui reçoit des barres de combustible nucléaire usé. Chaque tube comporte quatre parois latérales et quatre coins définissant une section transversale rectangulaire. La pluralité de tubes est disposée en un motif alterné. Un moyen de fixation fixe la pluralité de tubes les uns aux autres au niveau des coins de sorte que deux parois latérales adjacentes de tubes adjacents sont sensiblement alignées.

Le document JP 2001 141882 vise à fournir un récipient de stockage en béton capable de stocker des matières radioactives en toute sécurité, de façon stable et pour une longue période sans devoir recevoir de grandes vibrations, etc., ainsi qu'une une unité de réservoir de stockage muni d'une pluralité de récipients de stockage en béton. Pour ce faire, une courroie de fixation annulaire est fournie sur la surface périphérique du corps de récipient d'un fût en béton. La courroie de fixation comporte une pluralité de pièces de fixation séparées les unes des autres le long de la direction circonférentielle. Chaque pièce de fixation est conçue pour se fixer à un élément de connexion. Avec la bande de fixation et les éléments de connexion, une pluralité de fûts en béton sont reliés entre eux et constituent une unité de réservoir de stockage.

Le document US 4,652,422 divulgue un dispositif de support pour un élément formé d'au moins une partie d'un élément combustible de réacteur nucléaire allongé, le dispositif de support présentant un manchon de réception de forme allongée montée verticalement sur une surface de base et ayant une extrémité supérieure formée avec une ouverture et un dispositif de maintien situé à l'extrémité supérieure du manchon pour suspendre l'élément à l'intérieur du manchon de réception. Le dispositif de support comprend un couvercle amovible fermant l'ouverture à l'extrémité supérieure du manchon de réception, le dispositif de maintien étant fixé à l'intérieur du couvercle.

### Buts de l'invention

La présente invention a pour but de proposer un nouveau système de conditionnement et de transport de TGdGR dans un groupe d'emballages de Type A.

L'invention vise également à permettre la manutention et le transport de TGdGR dans des conditions de radioprotection réglementaires pour les opérateurs et permettant un temps d'arrêt du réacteur le plus court possible.

L'invention vise également à permettre le transport routier des TGdGR dans des conditions ordinaires, sans nécessiter un convoi exceptionnel.

### Principaux éléments caractéristiques de l'invention

Un premier aspect de la présente invention se rapporte à un ensemble constitué d'une pluralité de bouteilles d'emballage destinées au conditionnement, au stockage et au transport de barres ou tubes radioactifs, ci-après appelé ensemble-fagot, dans lequel :
- lesdites bouteilles sont identiques et interchangeables ;
- lesdites bouteilles sont attachées entre elles pour former un fagot ou un faisceau, grâce à des moyens de fixation rapide, ledit fagot comprenant N bouteilles, N ≥ 2 ;
caractérisé en ce que lesdites bouteilles sont réalisées en acier et ont une épaisseur supérieure à l'une de leurs deux extrémités, sur une certaine longueur.

De préférence, l'ensemble-fagot est modulaire et à géométrie variable, c'est-à dire qu'il peut être subdivisé ou dimensionné en sous-ensembles de plus petite taille, toujours en utilisant les mêmes moyens de fixation (3).

De préférence encore, chacune desdites bouteilles vise en premier lieu un emballage répondant à la certification de Type A du Règlement de transport des matières radioactives de l'AIEA et l'ensemble-fagot répond également de préférence à ladite certification de Type A.

Un deuxième aspect de l'invention se rapporte à l'utilisation d'un ensemble-fagot comme décrit ci-dessus, pour le conditionnement, le stockage et le transport de tubes-guides de grappes réformés provenant de réacteurs nucléaires à eau pressurisée ou à eau bouillante.

Un troisième aspect de l'invention concerne une installation de manutention pour le remplissage de bouteilles d'emballage, de préférence de Type A, avec des barres ou tubes radioactifs dans le bâtiment d'un réacteur nucléaire, lesdites bouteilles formant un ensemble-fagot comme décrit ci-dessus, ladite installation étant intégrée à l'ensemble-fagot de manière à ce que l'emprise au sol de cette installation intégrée soit limitée aux dimensions de l'ensemble-fagot.

De préférence, l'ensemble-fagot y est surmonté de passerelles et équipé d'échelles et de moyens de levage.

Un quatrième aspect de l'invention concerne une installation pour l'assemblage et le désassemblage avec des moyens de fixation rapide de bouteilles d'emballage, de préférence de Type A, en un ou plusieurs ensembles-fagots ainsi qu'en leurs sous-ensembles, comme décrits ci-dessus, à l'extérieur du bâtiment d'un réacteur nucléaire.

Un cinquième aspect de l'invention se rapporte à un procédé de conditionnement, de stockage et de transport de tubes-guides de grappes réformés provenant d'un réacteur nucléaire, au moyen de bouteilles d'emballage agençables en ensembles-fagots comme décrits ci-dessus, caractérisé par les étapes suivantes :
- on constitue à partir de bouteilles d'emballage, de préférence de Type A, disposées verticalement, un ensemble-fagot dans une station d'assemblage/de désassemblage, située en dehors du bâtiment de réacteur, l'assemblage des bouteilles d'emballage étant effectué en utilisant les moyens de fixation rapide ;
- on introduit l'ensemble-fagot constitué dans le bâtiment de réacteur, en disposition verticale dans une station de manutention ;
- pour chaque bouteille d'emballage de l'ensemble-fagot, on ouvre la bouteille, on introduit un tube-guide de grappe réformé et on referme la bouteille ;
- on retire l'ensemble-fagot du bâtiment de réacteur et on place à nouveau l'ensemble-fagot dans la station d'assemblage/de désassemblage, où on constitue des sous-ensembles de l'ensemble-fagot de taille inférieure à celui-ci et compatibles avec le transport routier de réglementation standard, à l'exclusion du convoi exceptionnel ;
- on bascule les sous-ensembles en position horizontale et on les amarre à un véhicule poids-lourd.

Selon des modes d'exécution préférés du procédé, le procédé de l'invention comporte une ou plusieurs des caractéristiques suivantes :
- l'étape d'introduction du tube-guide de grappe réformé dans sa bouteille d'emballage est effectuée hors piscine à sec ou sous eau, en utilisant une hotte lourde pour extraire le tube-guide du réacteur nucléaire ;
- l'étape d'introduction du tube-guide de grappe réformé dans sa bouteille d'emballage est effectuée en piscine, c'est-à-dire sous eau dans le réacteur, une opération de séchage supplémentaire des bouteilles étant prévue ;
- le transfert de l'ensemble-fagot de l'extérieur vers le bâtiment de réacteur et vice versa est réalisé par un tampon d'accès matériel, l'ensemble-fagot étant en position verticale ou horizontale pour le transfert.

### Brève description des figures

La figure 1, déjà mentionnée, montre schématiquement les équipements internes supérieurs d'une cuve de réacteur nucléaire REP de puissance supérieure ou égale à 900 MW (selon documentation EDF).

La figure 2A représente une vue en perspective d'un ensemble-fagot d'emballages de Type A selon une première forme d'exécution de la présente invention.

La figure 2B représente deux vues en perspective d'un ensemble-fagot d'emballages de Type A selon une deuxième forme d'exécution de la présente invention. La vue de gauche montre également un des emballages et son contenu, un TGdGR, représentés en coupe.

La figure 2C représente une vue en élévation et une vue en plan de l'ensemble-fagot selon la forme d'exécution de la figure 2B.

La figure 3 montre une vue en perspective d'un exemple de station d'assemblage et de désassemblage des emballages de Type A pour deux ensembles-fagots, selon la présente invention.

La figure 4 montre une vue en perspective d'un exemple de station de remplissage intérieure au bâtiment de réacteur pour des ensembles-fagots d'emballages de Type A, selon la présente invention.

La figure 5 montre une vue en perspective, une vue en élévation et une vue en plan d'un exemple de chargement des emballages de Type A en sous-ensembles de trois emballages, sur un poids-lourd de type semi-remorque, selon la présente invention.

### Description détaillée de l'invention.

Suite à l'identification de besoins non remplis par l'état de la technique, la Demanderesse a été amenée à concevoir un système composé d'un emballage de Type A, d'un ensemble-fagot de plusieurs de ces emballages, d'une station de remplissage en bâtiment réacteur, d'une station d'assemblage/désassemblage des emballages de Type A, d'un mode d'assemblage, de dispositifs de basculement et de transport spécifiques destinés au transport, à l'entreposage et au déchargement à destination de ce type de déchets radioactifs. On définit par fagot ou faisceau un ensemble d'emballages individuels, s'étendant dans les trois dimensions, ces emballages ayant chacun une forme adéquate, par exemple la forme d'un bidon allongé pour contenir un seul tube irradié. Ces emballages sont solidarisés entre eux.

Le concept d'emballage de Type A selon un ensemble-fagot permet :
- de limiter les manipulations des déchets radioactifs et limiter les espaces nécessaires aux diverses opérations ;
- d'effectuer plusieurs opérations en parallèle ;
- de maximiser la sécurité des opérations (démarche ALARA) ;
- de réduire à un minimum les temps des opérations en bâtiment de réacteur ;
- d'assurer l'évolution de la composition de l'ensemble-fagot en fonction :
   ∘ des besoins de remplacement des TGdGR (le nombre de TGdGR à conditionner peut varier selon leur état et la décision de l'opérateur de la centrale),
   ∘ du type de transport,
   ∘ des zones d'assemblage, de désassemblage, de remplissage de l'ensemble-fagot,
   ∘ de la zone de stockage ou de traitement ;
- de permettre une extraction massive des TGdGR et leur conditionnement directement dans des emballages de Type A aptes au transport. Les emballages d'entreposage en centrale disponibles actuellement ne sont pas agréés pour le transport, mais uniquement pour l'entreposage dans la centrale ;
- de remplir les emballages de Type A en bâtiment de réacteur, hors de ou dans la piscine ;
- d'assembler/de désassembler hors du bâtiment réacteur donc hors zone et donc en temps masqué.

Les caractéristiques et les exigences de l'invention sont les suivantes :
- un débit de dose équivalente (DDE) de 2 mSv/h maximum au contact ;
- un système identique pour tous les types de TGdGR d'unité REP ;
- l'assemblage d'emballages de Type A pour que l'ensemble-fagot reste de Type A ;
- une installation de remplissage en bâtiment de réacteur intégrée à l'ensemble-fagot ;
- une introduction du TGdGR dans l'emballage se faisant soit à sec, soit sous eau. L'emballage est refermé, assurant le confinement du TGdGR, avant de procéder au remplissage de l'emballage de Type A suivant. L'opération est répétée jusqu'à remplissage complet de l'ensemble-fagot ;
- un système d'assemblage et de désassemblage rapide des emballages de Type A en dehors du bâtiment de réacteur ;
- la possibilité d'assembler un sous-ensemble comprenant un nombre optimal d'emballages de Type A par ensemble-fagot en fonction des conditions locales et des besoins de l'intervention ;
- une emprise au sol dans le bâtiment de réacteur strictement limitée aux dimensions de l'ensemble-fagot ;
- des dimensions de l'ensemble-fagot compatibles avec les dimensions du dispositif d'introduction dans le bâtiment réacteur ;
- une composition de l'ensemble-fagot adaptée aux capacités de levage disponibles.

Actuellement, il n'existe aucune solution pour ce type d'application au moyen d'un tel équipement de Type A.

Les avantages sont les suivants :
- respect plus aisé des réglementations applicables au transport de ce type de déchets radioactifs ;
- transport par route sur des gabarits de transport standard ;
- adaptation aisée aux engins de manutention et de transport disponibles.

### Description de formes d'exécution préférées de l'invention

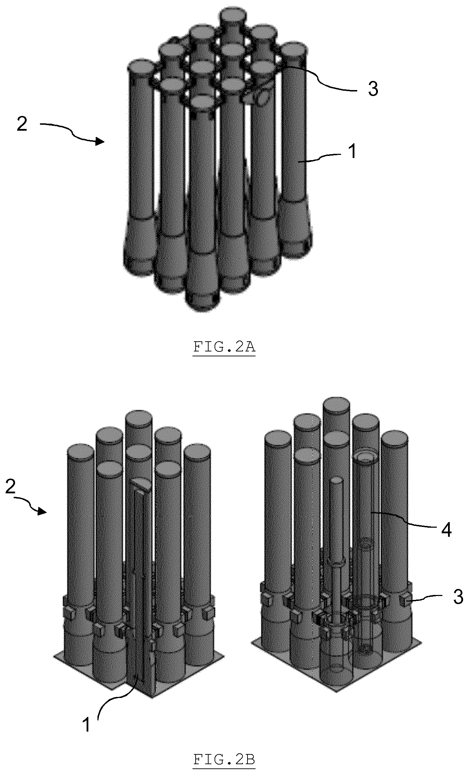

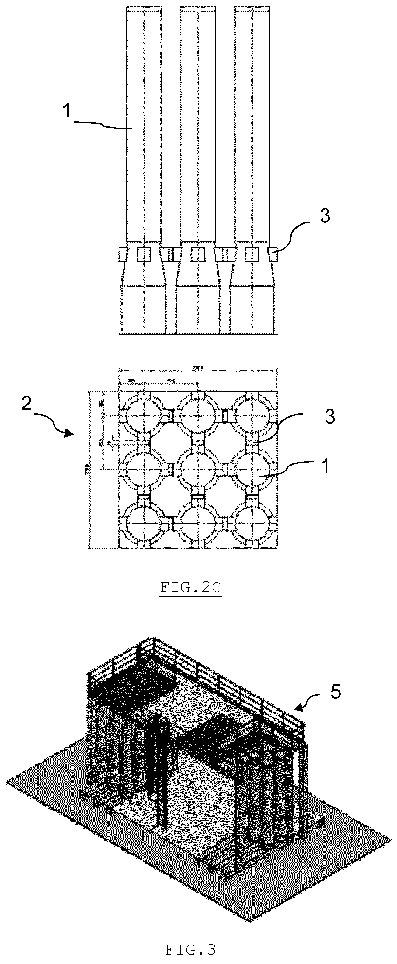

Selon une modalité d'exécution préférée de l'invention (Figures 2A, 2B, 2C), chaque emballage 1 de Type A contient un seul TGdGR 4. Il est conçu pour le transport des produits radioactifs. Tous les emballages 1 de Type A sont identiques et interchangeables. Ils auront la forme préférentielle d'un bidon ou d'un fût allongé, c'est-à-dire par exemple un cylindre avec un fond et un couvercle (ou avec deux couvercles), la longueur du cylindre étant au moins égale au diamètre du fond ou du couvercle. Ces emballages seront de préférence en acier. Afin de tenir compte du fait que l'extrémité des TGdGR qui se situait le plus près du coeur du réacteur est plus radioactive que l'autre extrémité, l'épaisseur d'acier sera plus importante à la première extrémité (par exemple 150 mm d'acier contre 60 mm d'acier). Les emballages sont assemblés en un ensemble-fagot 2. Un ensemble-fagot 2 peut être constitué de deux à N emballages 1 de Type A (N>2).

Les emballages 1 de Type A ainsi que l'ensemble-fagot 2 sont conçus pour remplir les exigences légales de radioprotection pour le transport. Les assemblages sont assurés par des dispositifs de connexions rapides 3, connus en soi de l'homme de métier. Les ensembles-fagots 2 peuvent être assemblés/désassemblés par emballage unitaire 1 ou sous-groupes ou sous-ensembles d'emballages unitaires 1 : ils sont modulaires et à géométrie variable. Les ensembles-fagots 2 ainsi que leurs éventuels sous-ensembles sont conçus pour être manipulés et remplis verticalement et pour être basculés en position horizontale au moyen d'engins de manutention appropriés (non représentés).

Un ensemble-fagot de 12 emballages a par exemple un poids total inférieur à 60 tonnes et peut entrer en position verticale dans le bâtiment de réacteur par le tampon d'accès matériel (TAM) de toutes les unités REP connues ; cependant, si besoin est, il peut entrer en position horizontale.

Le remplissage des ensembles-fagots 2 se fait en position verticale, normalement hors piscine, en extrayant les tubes un par un, de préférence sous hotte lourde. Néanmoins, il pourrait aussi être réalisé en piscine, le cas échéant.

L'assemblage et le désassemblage des ensembles-fagots 2 se fait en dehors du bâtiment de réacteur sur une station d'assemblage/de désassemblage 5, par exemple normalement prévue pour 2 postes de travail (Figure 3). Des engins de levage adéquats sont utilisés à cette fin (non représentés).

Après assemblage, les ensembles-fagots 2 de N emballages de Type A sont introduits dans le bâtiment de réacteur.

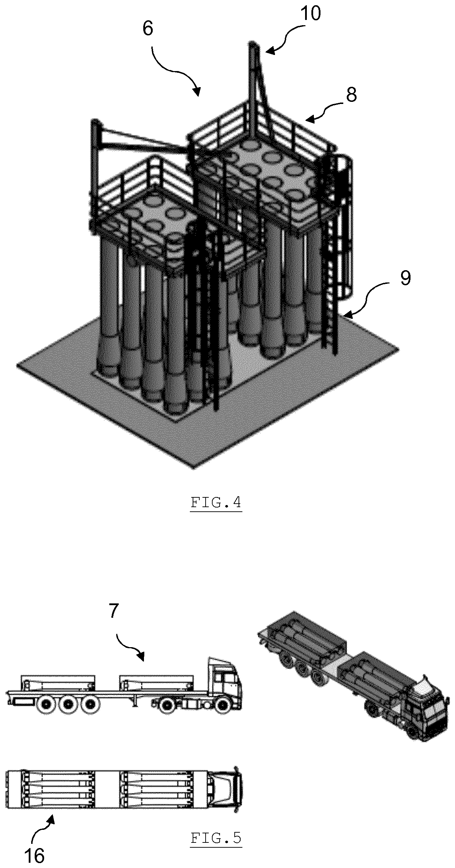

Lors du remplissage dans le bâtiment de réacteur, chaque ensemble-fagot 2 est intégré verticalement avec une station de manutention 6 (Figure 4). Chacun des ensembles-fagots 2 y est alors surmonté de passerelles 8 et équipé d'échelles 9 et d'engins de levage 10 (treuils, palonniers, etc.) pour permettre les opérations de remplissage. Le remplissage de chacun des emballages 1 de Type A peut se faire à sec ou sous eau, en position verticale. Cependant, les temps d'intervention et de séchage à sec sont drastiquement diminués par rapport à un remplissage sous eau.

Chaque emballage appartenant à l'ensemble-fagot 2 est successivement ouvert, rempli de son TGdGR 1 et ensuite refermé, l'opération est répétée jusqu'au remplissage de tous les emballages 1 de Type A de l'ensemble-fagot 2. Les ensembles-fagots 2 remplis sont ensuite transférés en dehors du bâtiment de réacteur.

Une fois remplis et transférés en dehors du bâtiment de réacteur, les ensembles-fagots 2 sont à nouveau acheminés sur la station d'assemblage/désassemblage 5 pour y être décomposés en sous-ensembles 16, par exemple de trois emballages assemblés, aptes au transport routier standard par poids-lourd par exemple de type semi-remorque 7 (Figure 5). Les sous-ensembles 16 basculés et arrimés à la semi-remorque par des engins de levage appropriés (non représentés) sont alors prêts pour le transport.

### Liste des symboles de référence

- 1: bouteille d'emballage individuel de type A
- 2: ensemble-fagot
- 3: connexion rapide
- 4: tube-guide de grappe
- 5: station d'assemblage/désassemblage
- 6: ensemble de chargement intérieur en bâtiment de réacteur (station de manutention)
- 7: poids-lourd
- 8: passerelle
- 9: échelle
- 10: engin de levage
- 11: plaque-support supérieure
- 12: tube-guide de grappe
- 13: plaque supérieure de coeur
- 14: enveloppe de coeur
- 15: entretoise
- 16: sous-ensemble de bouteilles d'emballage
- 20: cuve

## Revendications

1. Ensemble constitué d'une pluralité de bouteilles d'emballage (1) destinées au conditionnement, au stockage et au transport de barres ou tubes radioactifs, ci-après appelé ensemble-fagot (2), dans lequel :
- lesdites bouteilles (1) sont identiques et interchangeables ;
- lesdites bouteilles (1) sont attachées entre elles pour former un fagot ou un faisceau (2), grâce à des moyens de fixation rapide (3), ledit fagot (2) comprenant N bouteilles, N ≥ 2 ;
**caractérisé en ce que** lesdites bouteilles (1) sont réalisées en acier et ont une épaisseur supérieure à l'une de leurs deux extrémités, sur une certaine longueur.

2. Ensemble-fagot (2) selon la revendication 1, **caractérisé en ce qu'**il est modulaire et à géométrie variable, c'est-à dire qu'il peut être subdivisé ou dimensionné en sous-ensembles de plus petite taille, toujours en utilisant les mêmes moyens de fixation (3).

3. Utilisation d'un ensemble-fagot (2) selon l'une quelconque des revendications 1 à 2, pour le conditionnement, le stockage et le transport de tubes-guides de grappes réformés (4) provenant de réacteurs nucléaires à eau pressurisée ou à eau bouillante.

4. Installation de manutention (6) pour le remplissage de bouteilles d'emballage (1) avec des barres ou tubes radioactifs dans le bâtiment d'un réacteur nucléaire, lesdites bouteilles (1) formant un ensemble-fagot (2) selon l'une quelconque des revendications 1 à 2, ladite installation étant intégrée à l'ensemble-fagot (2) de manière à ce que l'emprise au sol de cette installation intégrée soit limitée aux dimensions de l'ensemble-fagot (2).

5. Installation de manutention (6) selon la revendication 4, **caractérisée en ce que** l'ensemble-fagot (2) y est surmonté de passerelles (8) et équipé d'échelles (9) et de moyens de levage (10).

6. Installation pour l'assemblage et le désassemblage (5) avec des moyens de fixation rapide (3) de bouteilles d'emballage (1) en un ou plusieurs ensembles-fagots (2) ainsi qu'en leurs sous-ensembles, selon l'une quelconque des revendications 1 à 2, à l'extérieur du bâtiment d'un réacteur nucléaire.

7. Procédé de conditionnement, de stockage et de transport de tubes-guides de grappes réformés (4) provenant d'un réacteur nucléaire, au moyen de bouteilles d'emballage (1) agençables en ensembles-fagots (2) selon l'une quelconque des revendications 1 à 2, **caractérisé par** les étapes suivantes :
- on constitue à partir de bouteilles d'emballage de Type A (1) disposées verticalement, un ensemble-fagot (2) dans une station d'assemblage/de désassemblage (5), située en dehors du bâtiment de réacteur, l'assemblage des bouteilles d'emballage (1) étant effectué en utilisant les moyens de fixation rapide (3) ;
- on introduit l'ensemble-fagot (2) constitué dans le bâtiment de réacteur, en disposition verticale dans une station de manutention (6) ;
- pour chaque bouteille d'emballage (1) de l'ensemble-fagot (2), on ouvre la bouteille (1), on introduit un tube-guide de grappe réformé (4) et on referme la bouteille (1) ;
- on retire l'ensemble-fagot (2) du bâtiment de réacteur et on place à nouveau l'ensemble-fagot (2) dans la station d'assemblage/de désassemblage (5), où on constitue des sous-ensembles (16) de l'ensemble-fagot (2) de taille inférieure à celui-ci et compatibles avec le transport routier de réglementation standard, à l'exclusion du convoi exceptionnel ;
- on bascule les sous-ensembles (16) en position horizontale et on les amarre à un véhicule poids-lourd.

8. Procédé selon la revendication 7, **caractérisé en ce que** l'étape d'introduction du tube-guide de grappe réformé (4) dans sa bouteille d'emballage (1) est effectuée hors piscine à sec ou sous eau, en utilisant une hotte lourde pour extraire le tube-guide du réacteur nucléaire.

9. Procédé selon la revendication 7, **caractérisé en ce que** l'étape d'introduction du tube-guide de grappe réformé (4) dans sa bouteille d'emballage (1) est effectuée en piscine, c'est-à-dire sous eau dans le réacteur, une opération de séchage supplémentaire des bouteilles étant prévue.

10. Procédé selon la revendication 7, **caractérisé en ce que** le transfert de l'ensemble-fagot (2) de l'extérieur vers le bâtiment de réacteur et vice versa est réalisé par un tampon d'accès matériel, l'ensemble-fagot (2) étant en position verticale ou horizontale pour le transfert.

## Patentansprüche

1. Einheit, gebildet aus einer Vielzahl von Verpackungsflaschen (1), die für die Verpackung, die Lagerung und den Transport von radioaktiven Stäben oder Röhren bestimmt sind, nachfolgend als gebündelte Einheit (2) bezeichnet, wobei:
- die Flaschen (1) identisch und austauschbar sind,
- die Flaschen (1) mit Hilfe von Schnellbefestigungsmitteln (3) miteinander verbunden sind, um ein Bündel oder ein Büschel (2) zu bilden, wobei das Bündel (2) N Flaschen, N ≥ 2, umfasst,
**dadurch gekennzeichnet, dass** die Flaschen (1) aus Stahl hergestellt sind und an einem ihrer beiden Enden über eine bestimmte Länge eine größere Dicke haben.

2. Gebündelte Einheit (2) nach Anspruch 1, **dadurch gekennzeichnet, dass** sie modular und mit variabler Geometrie ist, das heißt, dass sie bei Verwendung derselben Befestigungsmittel (3) in Untereinheiten kleinerer Größe unterteilbar oder dimensionierbar ist.

3. Verwendung einer gebündelten Einheit (2) nach einem der Ansprüche 1 bis 2 für die Verpackung, die Lagerung und den Transport von Führungsrohren des reformierten Bündels (4) aus Druck- oder Siedewasser-Kernreaktoren.

4. Handhabungsanlage (6) für das Befüllen von Verpackungsflaschen (1) mit radioaktiven Stäben oder Röhren im Gebäude eines Kernreaktors, wobei die Flaschen (1) eine gebündelte Einheit (2) nach einem der Ansprüche 1 bis 2 bilden, wobei die Anlage in die gebündelte Einheit (2) derart integriert ist, dass die Bodenbeanspruchung dieser integrierten Anlage auf die Abmessungen der gebündelten Einheit (2) beschränkt ist.

5. Handhabungsanlage (6) nach Anspruch 4, **dadurch gekennzeichnet, dass** über die gebündelte Einheit (2) Brücken (8) führen und dass sie mit Leitern (9) und Hubmitteln (10) ausgestattet ist.

6. Anlage für das Gruppieren und die Demontage (5) mit Schnellbefestigungsmitteln (3) von Verpackungsflaschen (1) zu einem oder mehreren Einheiten-Bündeln (2) sowie ihren Untereinheiten nach einem der Ansprüche 1 bis 2 außerhalb des Gebäudes eines Kernreaktors.

7. Verpackungs-, Lager- und Transportverfahren von Führungsrohren des reformierten Bündels (4) aus einem Kernreaktor mit Hilfe von Verpackungsflaschen (1), die zu Einheits-Bündeln (2) anordbar sind, nach einem der Ansprüche 1 bis 2, **gekennzeichnet durch** die folgenden Schritte:
- Bilden einer gebündelten Einheit (2) aus vertikal angeordneten Verpackungsflaschen vom Typ A (1) in einer Gruppierungs-/Demontagestation (5), die sich außerhalb des Reaktorgebäudes befindet, wobei das Gruppieren der Verpackungsflaschen (1) mit Hilfe von Schnellbefestigungsmitteln (3) durchgeführt wird,
- Einsetzen der gebildeten gebündelten Einheit (2) im Reaktorgebäude in vertikaler Anordnung in eine Handhabungsstation (6),
- für jede Verpackungsflasche (1) Öffnen der Flasche (1) der gebündelten Einheit (2), Einsetzen eines Führungsrohrs des reformierten Bündels (4) und Verschließen der Flasche (1),
- Entnehmen der gebündelten Einheit (2) aus dem Reaktorgebäude und erneutes Platzieren der gebündelten Einheit (2) in die Gruppierungs-/Demontagestation (5), wo Untereinheiten (16) der gebündelten Einheit (2) kleinerer Größe als dieselbe gebildet werden, die mit dem den üblichen Vorschriften unterworfenen Straßentransport kompatibel sind, mit Ausnahme von Sonderkonvois,
- Schwenken der Untereinheiten (16) in horizontale Position und Verzurren auf einem Schwerlastfahrzeug.

8. Verfahren nach Anspruch 7, **dadurch gekennzeichnet, dass** der Schritt des Einsetzens des Führungsrohrs des reformierten Bündels (4) in seine Verpackungsflasche (1) außerhalb des Beckens trocken oder unter Wasser durchgeführt wird, bei Verwendung einer Schwerlasthaube, um das Führungsrohr aus dem Kernreaktor zu entfernen.

9. Verfahren nach Anspruch 7, **dadurch gekennzeichnet, dass** der Schritt des Einsetzens des Führungsrohrs des reformierten Bündels (4) in seine Verpackungsflasche (1) im Becken durchgeführt wird, das heißt, unter Wasser im Reaktor, wobei ein zusätzlicher Trocknungsvorgang der Flaschen vorgesehen ist.

10. Verfahren nach Anspruch 7, **dadurch gekennzeichnet, dass** der Transfer der gebündelten Einheit (2) von außerhalb in das Reaktorgebäude und zurück von einem Materialzugangspuffer durchgeführt wird, wobei die gebündelte Einheit (2) für den Transfer in vertikaler oder horizontaler Position ist.

## Claims

1. An assembly consisting of a plurality of packaging bottles (1) intended for conditioning, storing and transporting radioactive bars or tubes, hereinafter called the fagot assembly (2), wherein:
- said bottles (1) are identical and interchangeable;
- and said bottles (1) are attached to each other to form a fagot or a bundle (2), by means of quick-fastening means (3), said fagot (2) comprising N bottles, N ≥ 2;
**characterized in that** said bottles (1) are formed from steel and are thicker at one of the two ends thereof, over a certain length.

2. The fagot assembly (2) according to claim 1, **characterized in that** it is modular and has a variable geometry, i.e., it can be subdivided or dimensioned in smaller subassemblies, still using the same fastening means (3).

3. A use of a fagot assembly (2) according to any one of claims 1 to 2, for conditioning, storing and transporting reformed guide tubes for control cluster rods (4) coming from pressurized or boiling water nuclear reactors.

4. A handling installation (6) for filling packaging bottles (1) with radioactive bars or tubes in the building of a nuclear reactor, said bottles (1) forming a fagot assembly (2) according to any one of claims 1 to 2, said installation being integrated into the fagot assembly (2) so that the ground footprint of that integrated installation is limited to the dimensions of the fagot assembly (2).

5. The handling installation (6) according to claim 4, **characterized in that** the fagot assembly (2) is topped by walkways (8) and equipped with ladders (9) and lifting means (10).

6. An installation for the assembly and disassembly (5) with quick-fastening means (3) of packaging bottles (1) in one or more fagot assemblies (2) as well as in their subassemblies, according to any one of claims 1 to 2, outside the building of a nuclear reactor.

7. A conditioning, storage and transport method for reformed guide tubes for control cluster rods (4) coming from a nuclear reactor, by means of packaging bottles (1) that can be arranged in fagot assemblies (2) according to any one of claims 1 to 2, **characterized by** the following steps:
- Type A packaging bottles (1), arranged vertically, are used to form a fagot assembly (2) in an assembly/disassembly station (5), situated outside the reactor building, the assembly of the packaging bottles (1) being done using the quick-fastening means (3);
- the fagot assembly (2) thus formed is inserted in the reactor building, positioned vertically in a handling station (6);
- for each packaging bottle (1) of the fagot assembly (2), the bottle (1) is opened, a reformed guide tube for control cluster rods (4) is inserted, and the bottle (1) is closed;
- the fagot assembly (2) is removed from the reactor building and the fagot assembly (2) is once again placed in the assembly/disassembly station (5), where subassemblies (16) of the fagot assembly (2) are formed, these subassemblies being smaller than the latter and compatible with road transport under standard regulations, excluding special convoy;
- the subassemblies (16) are tilted to the horizontal position and fastened to a heavy goods vehicle.

8. A method according to claim 7, **characterized in that** the step for inserting the reformed guide tube for control cluster rods (4) into its packaging bottle (1) is carried out outside the pool, dry or underwater, using a heavy hood to remove the guide tube from the nuclear reactor.

9. The method according to claim 7, **characterized in that** the step for inserting the reformed guide tube for control cluster rods (4) into its packaging bottle (1) is carried out in the pool, i.e., underwater in the reactor, an additional operation for drying the bottles being provided.

10. The method according to claim 7, **characterized in that** the transfer of the fagot assembly (2) from the outside to the reactor building and vice versa is done using an equipment access hatch, the fagot assembly (2) being in a vertical or horizontal position for the transfer.
